(19) Europäisches Patentamt
European Patent Office
Office européen des brevets

(11) **EP 2 914 849 B1**

(12) **FASCICULE DE BREVET EUROPEEN**

(45) Date de publication et mention de la délivrance du brevet:
**17.06.2020 Bulletin 2020/25**

(51) Int Cl.:
*F03H 1/00* (2006.01)      *B64G 1/40* (2006.01)
*G05D 16/20* (2006.01)

(21) Numéro de dépôt: **13789865.6**

(22) Date de dépôt: **21.10.2013**

(86) Numéro de dépôt international:
**PCT/FR2013/052504**

(87) Numéro de publication internationale:
**WO 2014/068217 (08.05.2014 Gazette 2014/19)**

(54) **ALIMENTATION D'UN PROPULSEUR IONIQUE EN GAZ PROPULSIF**

TREIBGASVERSORGUNG FÜR EINE IONISCHE ANTRIEBSEINHEIT

PROPELLANT GAS SUPPLY FOR AN IONIC PROPULSION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1260322**

(43) Date de publication de la demande:
**09.09.2015 Bulletin 2015/37**

(73) Titulaire: **Safran Aircraft Engines**
**75015 Paris (FR)**

(72) Inventeurs:
• **KLEIN, Manuel**
  **F-27200 Vernon (FR)**
• **LE GONIDEC, Serge**
  **F-27200 Vernon (FR)**

(74) Mandataire: **Cabinet Beau de Loménie**
**158, rue de l'Université**
**75340 Paris Cedex 07 (FR)**

(56) Documents cités:
FR-A1- 2 973 081      KR-A- 20120 062 288
RU-C1- 2 149 440      US-A- 5 954 089
US-A1- 2004 061 028   US-A1- 2010 043 759

• **"Gas pipe discharge flow rate calculator", , 19 octobre 2012 (2012-10-19), XP055073873, Extrait de l'Internet: URL:http://web.archive.org/web/20121019165 530/http://www.pipeflowcalculations.com/ga sleak/ [extrait le 2013-08-01]**
• **"Lohm Laws for Gas - how to calculate flow resistance for gases", , 5 août 2013 (2013-08-05), XP055074126, Extrait de l'Internet: URL:http://www.theleeco.com/engineering/ga ses/calculate-flow-resistance-gases.cfm [extrait le 2013-08-05]**
• **GANAPATHI G B ET AL: "PERFORMANCE OF THE XENON FEED SYSTEM ON DEEP SPACE ONE", JOURNAL OF SPACECRAFT AND ROCKETS, AMERICAN INSTITUTE OF AERONAUTICS AND ASTRONAUTICS,REASTON,VA, US, vol. 37, no. 3, 1 May 2000 (2000-05-01), pages 392-398, XP000940099, ISSN: 0022-4650**
• **Ray B Thompson ET AL: "The Xenon Regulator and Feed System For Electric Propulsion Systems", The 29th International Electric Propulsion Conference, Princeton University, IEPC-2005-066, 31 October 2005 (2005-10-31), pages 1-7, XP055468586, DOI: 10.2514/2.3573 Retrieved from the Internet: URL:http://erps.spacegrant.org/uploads/ima ges/images/iepc_articledownload_1988-2007/ 2005index/066.pdf [retrieved on 2018-04-19]**

EP 2 914 849 B1

**Description**

Arrière-plan de l'invention

La présente invention concerne le domaine de l'alimentation de propulseurs ioniques, et plus spécifiquement un procédé et un dispositif d'alimentation d'un propulseur ionique en gaz propulsif.

On entend par propulseur ionique tout propulseur à réaction, notamment pour des applications spatiales, basé sur l'accélération de particules chargées par un champ électrostatique. Ceci comprend donc tant les propulseurs dans lesquels les particules sont chargées électriquement par contact comme les propulseurs dits plasmiques dans lesquels un plasma est généré qui contient les particules chargées. L'invention est particulièrement mais pas exclusivement applicable à l'alimentation de propulseurs plasmiques et notamment aux propulseurs dits à effet Hall comportant un canal annulaire, une anode, un circuit magnétique apte à générer un champ magnétique à une extrémité aval du canal annulaire, et une cathode située à l'extérieur de l'extrémité aval du canal annulaire, et dans lesquels un gaz propulsif, comme, par exemple du Xénon, est injecté dans le canal annulaire.

Typiquement, dans un tel propulseur à effet Hall en fonctionnement, un gaz propulsif est injecté, à proximité de l'anode, au fond du canal annulaire. Des électrons émis par la cathode et attirés vers l'anode au fond du canal annulaire sont piégés par le champ magnétique dans des trajectoires spirales entre les deux parois, formant ainsi une grille cathodique virtuelle. Des électrons échappant de cette enceinte magnétique en direction de l'anode entrent en collision avec des atomes du gaz propulsif injecté au fond du canal annulaire, créant ainsi un plasma ionisé.

Les ions positifs du plasma sont accélérés par le champ électrique régnant entre l'anode et la grille cathodique virtuelle formée par le nuage d'électrons piégés par le champ magnétique à l'extrémité ouverte du canal annulaire. Comme la masse de ces ions positifs est très supérieure à celle des électrons, leur trajectoire est à peine affectée par le champ magnétique. Les ions de ce jet plasmique sont finalement neutralisés en aval du champ magnétique par des électrons émis par la cathode ou ayant été produits par la ionisation du plasma.

On a commencé à utiliser les propulseurs ioniques dans des systèmes de commande d'orientation et/ou trajectoire (AOCS, de l'anglais « attitude and orbit control systems ») d'engins spatiaux et en particulier dans des AOCS de satellites géostationnaires. Les propulseurs ioniques permettent d'obtenir une impulsion spécifique ($I_{sp}$) très élevée, de l'ordre de 1500 s pour les propulseurs plasmiques à effet de Hall, ce qui permet d'obtenir un pilotage précis de l'orientation et/ou la position de l'engin avec une masse et une complexité sensiblement moindres que les systèmes classiques utilisant des dispositifs inertiels, tels que, par exemple, des roues de réaction, en combinaison avec des propulseurs chimiques pour leur désaturation.

De préférence, pour alimenter les propulseurs ioniques en gaz propulsif, celui-ci est stocké dans des réservoirs pressurisés. Toutefois, un inconvénient rencontré dans ce domaine est celui de réguler le débit, très faible, des gaz propulsif alimentant le propulseur ionique à partir d'un tel réservoir pressurisé. Ceci est d'autant plus difficile que la pression au sein du réservoir pressurisé va progressivement diminuer avec la vidange du réservoir, et qu'il peut être avantageux de réguler ce débit non pas à un niveau constant, mais à plusieurs niveaux différents ou à un niveau variable, de manière à adapter les performances du propulseur ionique à plusieurs situations différentes. L'utilisation de vannes ou restricteurs à débit variable aurait l'inconvénient d'augmenter la complexité mécanique du dispositif d'alimentation, ce qui est d'autant plus problématiques que l'environnement spatial est particulièrement ingrat pour les dispositifs mécaniques à pièces mobiles. Un procédé et dispositif de régulation du débit de gaz propulsif vers un propulseur ionique, utilisant des paires de vannes tout-ou-rien, a été divulgué par G. B Ganapathi et al dans l'article « Performance of the Xenon feed system of Deep Space One », Journal of Spacecraft and Rockets, vol. 37, no. 3, 1 mai 2000, p. 392.

Objet et résumé de l'invention

La présente divulgation vise à remédier à ces inconvénients, notamment en proposant un procédé d'alimentation d'un propulseur ionique en gaz propulsif provenant d'un réservoir pressurisé à travers un circuit d'alimentation comportant une vanne tout-ou-rien et, successivement en aval de ladite vanne tout-ou-rien, un restricteur haute pression, un réservoir tampon et au moins un restricteur basse pression et qui permette de réguler le débit de gaz propulsif avec précision en commandant la vanne tout-ou-rien.

On entend par vanne tout-ou-rien, dans le présent contexte, une vanne dont on ne peut commander que deux positions, ouverte ou fermée. Il n'est donc normalement pas possible de commander un niveau d'ouverture intermédiaire pour réguler ainsi le débit de manière directe. Toutefois, une vanne tout-ou-rien présente l'important avantage d'une plus grande simplicité, même dans des environnements très exigeants comme ceux rencontrés dans des applications spatiales.

Dans au moins un mode de réalisation, le but de réguler le débit de gaz propulsif à travers la vanne tout-ou-rien est atteint grâce au fait que ledit procédé comporte des étapes de :

calcul d'une consigne de pression du réservoir tampon en fonction d'une consigne de débit ;
calcul de la différence entre la consigne de pression du réservoir tampon et une pression mesurée dans le réservoir tampon ;
calcul d'une consigne de temps d'ouverture de la vanne tout-ou-rien en fonction de ladite différence, d'une pression à l'intérieur dudit réservoir pressurisé, et de la perte de charge du restricteur haute pression ; et
ouverture de la vanne tout-ou-rien suivant ladite consigne de temps d'ouverture.

Ainsi, en modulant les temps d'ouverture de la vanne tout-ou-rien en fonction de l'évolution des pressions en amont et en aval de la vanne tout-ou-rien il est possible de réguler le débit de gaz propulsif de manière indirecte mais précise.

En particulier, le calcul de la consigne de temps d'ouverture s'effectue sur base d'un modèle fluidique inversé dudit circuit d'alimentation. Un modèle fluidique du circuit d'alimentation peut représenter l'arrangement de restricteurs d'écoulement et de capacités fluidiques dans le circuit d'alimentation, y compris les capacités des conduits du circuit. Ce modèle offre ainsi une base pour calculer l'évolution de la pression en aval de la vanne tout-ou-rien en fonction du temps d'ouverture de cette vanne et de la pression en amont. En l'inversant, il est donc aussi possible de calculer le temps d'ouverture nécessaire pour atteindre une consigne de pression en aval de la vanne.

En même temps, le calcul de la consigne de pression du réservoir tampon peut s'effectuer sur base d'un modèle fluidique inversé de l'au moins un restricteur basse pression en aval du réservoir tampon. En effet, comme un modèle fluidique de l'au moins un restricteur permet le calcul du débit en fonction de la pression en amont, en l'inversant il devient possible de calculer la consigne de pression sur base de celle de débit.

Ledit circuit d'alimentation en gaz propulsif peut notamment comprendre une bifurcation en aval du restricteur basse pression, avec une première branche pour l'alimentation d'une section anodique du propulseur ionique et une deuxième branche pour l'alimentation d'une section cathodique du propulseur ionique, chacune desdites première et deuxième branche comportant un restricteur supplémentaire. Dans ce cas, pour le calcul de la consigne de pression du réservoir tampon en fonction de la consigne de débit et afin de faciliter les calculs, il est possible d'utiliser un modèle fluidique simplifié dans lequel l'ensemble du restricteur basse pression, la bifurcation en aval de celui-ci et les deux restricteurs supplémentaires soient représentés par un seul restricteur.

Afin d'assurer l'efficacité de ce procédé d'alimentation, le déclenchement de l'ouverture de la vanne tout-ou-rien peut être restreint par un ou plusieurs critères. Par exemple, un premier critère peut être que l'ouverture de la vanne tout-ou-rien suivant la consigne de temps d'ouverture ne puisse être déclenchée que si la consigne de pression du réservoir tampon est sensiblement supérieure à la pression mesurée dans le réservoir tampon. Par « sensiblement supérieure » on entend que la consigne de pression est supérieure à la pression mesurée par une marge considérable, telle que, par exemple, 5% ou 10%. Ce critère sert à éviter des déclenchements intempestifs de l'ouverture de la vanne à cause de légères fluctuations de pression, ainsi qu'à restreindre le nombre d'ouvertures et fermetures de la vanne afin de prolonger sa durée de vie. Un deuxième critère pouvant être également utilisé en combinaison avec le premier critère ou de manière isolée est que l'ouverture de la vanne tout-ou-rien suivant la consigne de temps d'ouverture ne puisse être déclenchée que si la pression mesurée dans le réservoir tampon diminue ou est nulle. On évite de cette manière des déclenchements intempestifs notamment lorsqu'on termine le gonflage du réservoir tampon et que le tronçon sous haute-pression se dégonfle dans ce volume, ou l'ouverture de la vanne tout-ou-rien lorsque le circuit est bloqué en aval. Finalement, un troisième critère pouvant également être utilisé en combinaison avec le premier critère et/ou le deuxième critère, ou de manière isolée est que l'ouverture de la vanne tout-ou-rien suivant la consigne de temps d'ouverture ne puisse être déclenchée que si la consigne de temps d'ouverture est supérieure à un seuil minimal prédéterminé. On évite de cette manière commandes de la vanne tout-ou-rien incompatibles avec son temps de réponse et on restreint également le nombre d'ouvertures et fermetures de la vanne afin de prolonger sa durée de vie.

Pour l'étape du calcul d'une consigne de temps d'ouverture de la vanne tout-ou-rien en fonction de ladite différence et d'une pression à l'intérieur dudit réservoir pressurisé, cette dernière peut être mesurée directement. Toutefois, afin de limiter le nombre de capteurs et simplifier ainsi le dispositif d'alimentation, il est alternativement possible de mesurer indirectement cette pression en sur base d'une pression initiale et un débit global de gaz propulsif écoulé à travers le circuit d'alimentation. En intégrant la quantité globale de gaz propulsif qui a été expulsée du réservoir pressurisé à travers le circuit d'alimentation, il est possible de calculer l'évolution de la pression du gaz propulsif restant dans le réservoir pressurisé.

Le circuit d'alimentation en gaz propulsif peut comporter aussi une vanne de sécurité en amont de la vanne tout-ou-rien, afin d'isoler cette dernière et le reste du circuit en aval de celle-ci en cas de défaillance technique.

La présente divulgation concerne également un dispositif d'alimentation d'un propulseur ionique en gaz propulsif qui soit apte à mettre en œuvre un tel procédé d'alimentation. Pour cela, dans au moins un mode de réalisation, ce dispositif d'alimentation peut comprendre un réservoir pressurisé pour le gaz propulsif, un circuit d'alimentation connecté au réservoir pressurisé et comportant au moins une vanne tout-ou-rien, un restricteur haute pression, un réservoir tampon, et un restricteur basse pression connectés successivement en aval du réservoir pressurisé, ainsi qu'une unité de commande de la vanne tout-ou-rien configurée pour calculer une consigne de pression du réservoir tampon en fonction d'une consigne de débit, calculer la différence entre la consigne de pression du réservoir tampon et une pression mesurée dans le réservoir tampon, calculer une consigne de temps d'ouverture de la vanne tout-ou-rien en fonction de ladite différence, d'une pression à l'intérieur dudit réservoir pressurisé et de la perte de charge du restricteur haute pression, et commander l'ouverture de la vanne tout-ou-rien suivant ladite consigne de temps d'ouverture.

Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :

- la figure 1 est une vue schématique du dispositif d'alimentation suivant un premier mode de réalisation ;
- la figure 2 est un schéma de procédé du procédé d'alimentation suivant le même mode de réalisation ;
- les figures 3A à 3D sont des graphiques représentant l'évolution dans le temps de, respectivement, une consigne de différence de pression, une consigne de temps d'ouverture de la vanne tout-ou-rien, un signal d'ouverture de la vanne tout-ou-rien, et une pression à l'intérieur du réservoir tampon ; et
- la figure 4 est une vue schématique du dispositif d'alimentation suivant un deuxième mode de réalisation.

Description détaillée de l'invention

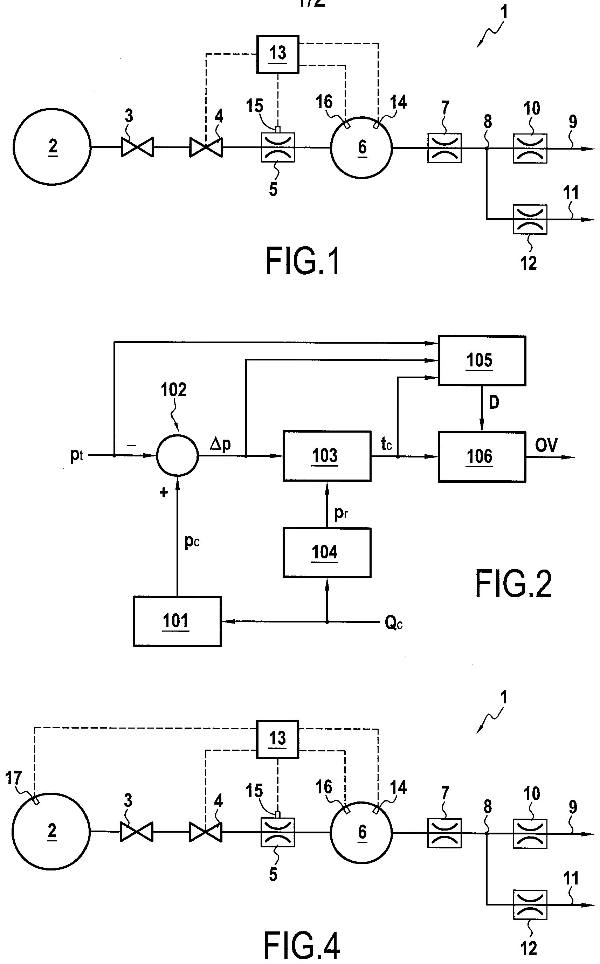

La figure 1 illustre un dispositif d'alimentation 1 d'un moteur plasmique (non illustré) en gaz propulsif, suivant un premier mode de réalisation, comprenant un réservoir pressurisé 2 connecté à un circuit d'alimentation comprenant une vanne de sécurité 3, une vanne tout-ou-rien 4 pour la régulation du débit, un restricteur d'écoulement haute pression 5, un réservoir tampon 6, un restricteur d'écoulement basse pression 7, une bifurcation 8 avec une première branche 9 pour l'alimentation d'un secteur anodique du moteur plasmique, avec son propre restricteur 10, et une deuxième branche 11 pour l'alimentation d'un secteur cathodique du moteur plasmique, avec aussi son propre restricteur 12, et une unité de commande 13, connectée à un capteur de pression 14 dans le réservoir tampon 6.

Le réservoir pressurisé 2 est adapté à contenir un gaz propulsif, tel que, par exemple, du Xénon, à haute pression, de manière à pouvoir alimenter le moteur plasmique pendant toute la durée de vie anticipée de l'engin spatial comprenant le moteur plasmique et son dispositif d'alimentation 1. La vanne de sécurité 3 est interposée entre le réservoir pressurisé 2 et le reste du circuit d'alimentation, de manière à isoler le réservoir pressurisé 2 pendant, par exemple, le lancement de l'engin spatial, ou en cas de défaillance. Pendant le fonctionnement normal du dispositif d'alimentation 1, cette vanne de sécurité 3 reste toutefois ouverte.

La vanne tout-ou-rien 4, connectée directement en aval de la vanne de sécurité 3 dans le circuit d'alimentation, est connectée à l'unité de commande 13 afin de réguler le débit de gaz propulsif provenant du réservoir pressurisé 2 qui est fourni au moteur plasmique à travers le circuit d'alimentation suivant le procédé d'alimentation qui sera décrit plus bas. En aval de cette vanne tout-ou-rien 4 dans le circuit d'alimentation, le restricteur haute pression 5 restreint l'écoulement de gaz propulsif de la vanne tout-ou-rien 4 au réservoir tampon 6. Ensuite, en aval du réservoir tampon 6, le restricteur basse pression 7 restreint l'écoulement du gaz propulsif vers la bifurcation 8 et ses première et deuxième branches 9,11. Finalement, dans chacune de ces branches 9, 11, le restricteur correspondant 10, 12 restreint l'écoulement du gaz propulsif vers les différentes sections du moteur plasmique.

En fonctionnement, l'unité de commande 13 pilote la vanne tout-ou-rien 4 de manière à réaliser le procédé d'alimentation illustré sur la figure 2. Dans une première étape 101 de ce procédé, et en fonction d'une consigne de débit $Q_c$, pouvant être une consigne de débit massique provenant d'un système de commande d'orientation et/ou trajectoire de l'engin spatial, l'unité de commande 13 calcule une consigne $p_c$ de pression dans le réservoir tampon 6 sur base d'un modèle inversé de la partie du circuit d'alimentation située en aval du réservoir tampon 6. Ce modèle peut être simplifié, de manière à considérer l'ensemble des restricteurs 7, 10 et 12, ainsi que la capacité fluidique des conduits les reliant, comme un simple restricteur unique.

Ainsi, la consigne $p_c$ peut être calculée, par exemple, suivant la formule suivante :

$$p_c = Q_c \frac{PdC_{aval}}{k_g \cdot f(T)}$$

dans laquelle $PdC_{aval}$ représente la perte de charge équivalente du circuit d'alimentation en aval du réservoir tampon 6, mesurée en Lohms, $k_g$ est un coefficient du gaz propulsif, et f(T) un facteur correctif en fonction de la température T du gaz propulsif.

Cette consigne de pression $p_c$ représente donc la pression devant régner à l'intérieur du réservoir tampon 6 pour ce qu'un débit de gaz propulsif suivant la consigne de débit $Q_c$ s'écoule du réservoir tampon vers le moteur plasmique à travers la partie du circuit d'alimentation située en aval du réservoir tampon 6.

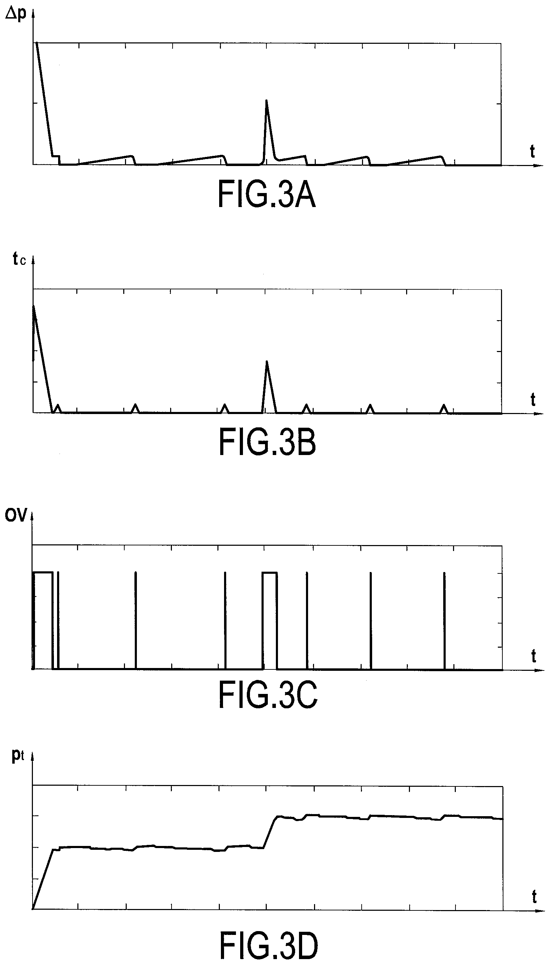

Dans l'étape suivante 102, cette consigne de pression $p_c$ est comparée à une pression réelle $p_t$ à l'intérieur du réservoir tampon 6 afin de calculer une différence $\Delta p$ entre la consigne de pression $p_c$ et la pression réelle $p_t$. La figure 3A illustre un exemple d'évolution de cette différence $\Delta p$ dans le temps. Ensuite, dans l'étape 103, une consigne $t_c$ de temps d'ouverture de la vanne tout-ou-rien 4 est calculée en fonction de la différence $\Delta p$ et d'une pression $p_r$ dans le réservoir pressurisé 2, sur base d'un modèle fluidique inversé de l'ensemble du circuit d'alimentation, y compris des capacités fluidiques dans les conduits situés entre les deux vannes 3,4, entre la vanne tout-ou-rien 4 et le restricteur haute pression 5 et dans les conduits reliant les restricteurs 7, 10 et 12.

Par exemple, deux formules différentes peuvent être utilisées pour calculer cette consigne $t_c$ de temps d'ouverture de la vanne tout-ou-rien 4, selon le rapport entre la consigne de pression $p_c$ et la pression $p_r$ dans le réservoir pressurisé 2.

Ainsi, si la différence $\Delta p$ est inférieure à la pression $p_r$ dans le réservoir pressurisé 2, multipliée par le volume mort $V_{4\text{-}5}$ entre la vanne tout-ou-rien 4 et le restricteur haute pression 5, et divisée par le volume $V_6$ du réservoir tampon 6, la consigne $t_c$ de temps d'ouverture de la vanne tout-ou-rien 4 peut être calculée suivant la formule suivante :

$$t_c = \frac{\Delta p \quad \cdot R \cdot T \cdot V_6}{k_{Lee} \cdot p_r \cdot f(T) \cdot M_{mol} \cdot c_g{}^2} \cdot PdC_4$$

dans laquelle $c_g$ représente la vitesse du son dans le gaz propulsif, $k_{Lee}$ un coefficient propre à la vanne tout-ou-rien 4 et/ou au restricteur haute pression 5, $M_{mol}$ la masse molaire du gaz propulsif, $PdC_4$ la perte de charge de la vanne tout-ou-rien 4, et R la constante spécifique du gaz propulsif (pouvant être éventuellement approximée par la constante universelle des gaz parfaits).

Si, par contre, la différence $\Delta p$ est égale ou supérieure à la pression $p_r$ dans le réservoir pressurisé 2, multipliée par le volume mort $V_{4\text{-}5}$ entre la vanne tout-ou-rien 4 et le restricteur haute pression 5, et divisée par le volume $V_6$ du réservoir tampon 6, la consigne $t_c$ de temps d'ouverture de la vanne tout-ou-rien 4 peut être calculée suivant la formule suivante :

$$t_c = \frac{\Delta p \quad \cdot R \cdot T \cdot V_6}{k_{Lee} \cdot p_r \cdot f(T) \cdot M_{mol} \cdot c_g{}^2} \cdot (PdC_4 + PdC_5)$$

dans laquelle $PdC_5$ représente la perte de charge du restricteur haute pression 5.

Dans le mode de réalisation illustré, la pression $p_r$ dans le réservoir pressurisé 2 est estimée indirectement en une étape 104 par intégration de la consigne de débit $Q_c$ passée pour estimer la quantité de gaz propulsif ayant déjà été extraite du réservoir pressurisé 2 et calcul de la différence entre une pression initiale connue $p_i$ et la pression actuelle $p_r$ du réservoir pressurisé 2. La figure 3B illustre un exemple d'évolution de la consigne de temps d'ouverture $t_c$ dans le temps, en correspondance avec l'évolution de la différence $\Delta p$ illustrée sur la figure 3A.

Pour que l'ouverture de la vanne tout-ou-rien 4 soit toutefois déclenchée, trois conditions doivent être remplies en une étape 105 :

D'abord, la différence de pression $\Delta p$ entre la consigne de pression $p_c$ et la pression réelle $p_t$ doit être sensiblement positive, c'est-à-dire que la consigne de pression $p_c$ doit être supérieure à la pression réelle $p_t$ par une marge détectable, par exemple 5% ou 10%.

En outre, la pression $p_t$ dans le réservoir tampon 6 doit être décroissante ou nulle.

Finalement, la consigne $t_c$ de temps d'ouverture de la vanne tout-ou-rien 4 doit être supérieure à un seuil minimal $t_{c,min}$.

Uniquement si ces trois conditions sont réunies, un signal de déclenchement D va déclencher, dans l'étape 106, l'émission d'une commande OV d'ouverture de la vanne tout-ou-rien 4 par l'unité de commande 13 pendant un temps correspondant à la consigne de temps d'ouverture $t_c$, contrôlé par un temporisateur intégré dans l'unité de commande 13. La figure 3C illustre comment cette commande est émise en réponse à l'évolution de la consigne de temps d'ouverture $t_c$ dans le temps illustrée sur la figure 3B. Grâce à l'ouverture temporaire de la vanne tout-ou-rien 4 suivant la commande OV de la figure 3C, la pression $p_t$ dans le réservoir tampon 6 va remonter, comme illustré sur la figure 3D, provoquant ainsi une augmentation du débit de gaz propulsif s'écoulant de ce réservoir tampon 6 vers le moteur plasmatique.

La Figure 4 illustre un dispositif d'alimentation 1 suivant un mode de réalisation alternatif, et comportant au moins un capteur de pression 17 dans le réservoir pressurisé 2, connecté à l'unité de commande 13. Tous les autres éléments de ce deuxième mode de réalisation sont équivalents à des éléments correspondants du premier mode de réalisation et reçoivent les mêmes chiffres de référence. Le fonctionnement de ce dispositif d'alimentation 1 correspond également au procédé illustré sur la Figure 2, sauf que, dans l'étape 104 la pression $p_r$ dans le réservoir pressurisé 2 peut être mesurée directement par l'au moins un capteur de pression 17, plutôt qu'estimée indirectement.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Procédé d'alimentation d'un propulseur ionique en gaz propulsif provenant d'un réservoir pressurisé (2) à travers un circuit d'alimentation comportant une vanne tout-ou-rien (4) et, successivement en aval de ladite vanne tout-ou-rien (4), un restricteur haute pression (5), un réservoir tampon (6) et au moins un restricteur basse pression (7), comportant les étapes de :

   calcul d'une consigne de pression ($p_c$) du réservoir tampon (6) en fonction d'une consigne de débit ($Q_c$) ;
   calcul de la différence ($\Delta p$) entre la consigne de pression ($p_c$) du réservoir tampon (6) et une pression ($p_t$) mesurée dans le réservoir tampon (6);
   calcul d'une consigne ($t_c$) de temps d'ouverture de la vanne tout-ou-rien (4) en fonction de ladite différence ($\Delta p$), d'une pression ($p_r$) à l'intérieur dudit réservoir pressurisé (2) et de la perte de charge du restricteur haute pression (5) ; et
   ouverture de la vanne tout-ou-rien (4) suivant ladite consigne de temps d'ouverture ($t_c$).

2. Procédé d'alimentation suivant la revendication 1, dans lequel ledit calcul de la consigne de temps d'ouverture ($t_c$) s'effectue sur base d'un modèle fluidique inversé dudit circuit d'alimentation.

3. Procédé d'alimentation suivant l'une quelconque des revendications 1 ou 2, dans lequel le calcul de la consigne de pression ($p_c$) du réservoir tampon (6) s'effectue sur base d'un modèle fluidique inversé de l'au moins un restricteur basse pression (7) en aval du réservoir tampon (6).

4. Procédé d'alimentation suivant l'une quelconque des revendications 1 à 3, dans lequel l'ouverture de la vanne tout-ou-rien (4) suivant la consigne de temps d'ouverture ($t_c$) est uniquement déclenchée si la consigne de pression ($p_c$) du réservoir tampon (6) est supérieure à la pression ($p_t$) mesurée dans le réservoir tampon (6) par une marge de 5%, optionnellement par une marge de 10%.

5. Procédé d'alimentation suivant l'une quelconque des revendications 1 à 4, dans lequel l'ouverture de la vanne tout-ou-rien (4) suivant la consigne de temps d'ouverture ($t_c$) est uniquement déclenchée si la pression ($p_t$) mesurée dans le réservoir tampon (6) diminue ou est nulle.

6. Procédé d'alimentation suivant l'une quelconque des revendications 1 à 5, dans lequel l'ouverture de la vanne tout-ou-rien (4) suivant la consigne de temps d'ouverture ($t_c$) est uniquement déclenchée si la consigne de temps d'ouverture ($t_c$) est supérieure à un seuil minimal prédéterminé ($t_{c,min}$).

7. Procédé d'alimentation suivant l'une quelconque des revendications 1 à 6, dans lequel ledit circuit d'alimentation en gaz propulsif comprend une bifurcation (8) en aval du restricteur basse pression (7), avec une première branche (9) pour l'alimentation d'une section anodique du propulseur ionique et une deuxième branche (11) pour l'alimentation d'une section cathodique du propulseur ionique, chacune desdites première et deuxième branche (9,11) comportant un restricteur supplémentaire (10,12).

8. Procédé d'alimentation suivant l'une quelconque des revendications précédentes, dans lequel la pression ($p_r$) à l'intérieur dudit réservoir pressurisé (2) est mesurée indirectement sur base d'une pression initiale ($p_i$) et d'un débit global de gaz propulsif écoulé à travers le circuit d'alimentation.

9. Procédé d'alimentation suivant l'une quelconque des revendications précédentes, dans lequel ledit circuit d'alimentation en gaz propulsif comporte aussi une vanne de sécurité (3) en amont de la vanne tout-ou-rien (4).

**10.** Dispositif (1) d'alimentation d'un propulseur ionique en gaz propulsif comprenant :

un réservoir pressurisé (2) pour le gaz propulsif ;
un circuit d'alimentation connecté au réservoir pressurisé et comportant au moins une vanne tout-ou-rien (4), un restricteur haute pression (5), un réservoir tampon (6) et un restricteur basse pression (7) connectés successivement en aval du réservoir pressurisé (2) ; et
une unité de commande (13) de la vanne tout-ou-rien configurée pour :

calculer une consigne de pression ($p_c$) du réservoir tampon (6) en fonction d'une consigne de débit ($Q_c$) ;
calculer la différence ($\Delta p$) entre la consigne de pression ($p_c$) du réservoir tampon et une pression ($p_t$) mesurée dans le réservoir tampon (6) ;
calculer une consigne de temps d'ouverture ($t_c$) de la vanne tout-ou-rien (4) en fonction de ladite différence ($\Delta p$), d'une pression ($p_r$) à l'intérieur dudit réservoir pressurisé (2), et de la perte de charge du restricteur haute pression (5) ; et
commander l'ouverture de la vanne tout-ou-rien (4) suivant ladite consigne de temps d'ouverture ($t_c$).

**Patentansprüche**

**1.** Verfahren zum Versorgen eines Ionen-Triebwerks mit Treibgas aus einem Druckbehälter (2) durch einen Versorgungskreis, der ein Ein/Aus-Ventil (4) sowie nacheinander stromabwärts des Ein/Aus-Ventils (4) einen Hochdruckbegrenzer (5), einen Pufferbehälter (6) und wenigstens einen Niederdruckbegrenzer (7) umfasst, mit den folgenden Schritten des:

Berechnens eines Drucksollwerts ($p_c$) des Pufferbehälters (6) in Abhängigkeit von einem Durchflusssollwert ($Q_c$),
Berechnens der Differenz ($\Delta p$) zwischen dem Drucksollwert ($p_c$) des Pufferbehälters (6) und einem in dem Pufferbehälter (6) gemessenen Druck ($p_t$),
Berechnens eines Sollwerts ($t_c$) einer Öffnungszeit des Ein/Aus-Ventils (4) in Abhängigkeit von der Differenz ($\Delta p$), einem Druck ($p_r$) innerhalb des Druckbehälters (2) und dem Druckabfall des Hochdruckbegrenzers (5), und
Öffnens des Ein/Aus-Ventils (4) entsprechend dem Öffnungszeitsollwert ($t_c$).

**2.** Versorgungsverfahren nach Anspruch 1, bei dem das Berechnen des Öffnungszeitsollwerts ($t_c$) auf der Basis eines umgekehrten Strömungsmodells des Versorgungskreises erfolgt.

**3.** Versorgungsverfahren nach einem der Ansprüche 1 oder 2, bei dem das Berechnen des Drucksollwerts ($p_c$) des Pufferbehälters (6) auf der Basis eines umgekehrten Strömungsmodells des wenigstens einen Niederdruckbegrenzers (7) stromabwärts des Pufferbehälters (6) erfolgt.

**4.** Versorgungsverfahren nach einem der Ansprüche 1 bis 3, bei dem das Öffnen des Ein/Aus-Ventils (4) entsprechend dem Öffnungszeitsollwert ($t_c$) erst ausgelöst wird, wenn der Drucksollwert ($p_c$) des Pufferbehälters (6) durch eine Spanne von 5 %, optional durch eine Spanne von 10 %, größer als der in dem Pufferbehälter (6) gemessene Druck ($p_t$) ist.

**5.** Versorgungsverfahren nach einem der Ansprüche 1 bis 4, bei dem das Öffnen des Ein/Aus-Ventils (4) entsprechend dem Öffnungszeitsollwert ($t_c$) erst ausgelöst wird, wenn der in dem Pufferbehälter gemessene Druck ($p_t$) abnimmt oder Null ist.

**6.** Versorgungsverfahren nach einem der Ansprüche 1 bis 5, bei dem das Öffnen des Ein/Aus-Ventils (4) entsprechend dem Öffnungszeitsollwert ($t_c$) erst ausgelöst wird, wenn der Öffnungszeitsollwert ($t_c$) oberhalb eines vorbestimmten Mindestschwellwertes ($t_{c,min}$) liegt.

**7.** Versorgungsverfahren nach einem der Ansprüche 1 bis 6, bei dem der Treibgasversorgungskreis eine Gabelung (8) stromabwärts des Niederdruckbegrenzers (7) umfasst, mit einem ersten Zweig (9) zur Versorgung eines Anodenabschnitts des Ionen-Triebwerks und einem zweiten Zweig (11) zur Versorgung eines Kathodenabschnitts des Ionen-Triebwerks, wobei jeder der ersten und zweiten Zweige (9, 11) einen zusätzlichen Begrenzer (10, 12) umfasst.

**8.** Versorgungsverfahren nach einem der vorhergehenden Ansprüche, bei dem der Druck ($p_r$) innerhalb des Druckbehälters (2) auf der Basis eines Anfangsdrucks ($p_i$) und einer Gesamtdurchflussrate an Treibgas, das durch den Versorgungskreis geströmt ist, indirekt gemessen wird.

9. Versorgungsverfahren nach einem der vorhergehenden Ansprüche, bei dem der Treibgasversorgungskreis auch ein Sicherheitsventil (3) stromaufwärts des Ein/Aus-Ventils (4) umfasst.

10. Vorrichtung (1) zum Versorgen eines Ionen-Triebwerks mit Treibgas, umfassend:

einen Druckbehälter (2) für das Treibgas,
einen Versorgungskreis, der mit dem Druckbehälter verbunden ist und wenigstens ein Ein/Aus-Ventil (4), einen Hochdruckbegrenzer (5), einen Pufferbehälter (6) und einen Niederdruckbegrenzer (7) umfasst, die nacheinander stromabwärts des Druckbehälters (2) verbunden sind, und
eine Einheit zum Steuern (13) des Ein/Aus-Ventils, die dazu ausgelegt ist:

einen Drucksollwert ($p_c$) des Pufferbehälters (6) in Abhängigkeit von einem Durchflusssollwert ($Q_c$) zu berechnen,
die Differenz ($\triangle p$) zwischen dem Drucksollwert ($p_c$) des Pufferbehälters und einem in dem Pufferbehälter (6) gemessenen Druck ($p_t$) zu berechnen,
einen Sollwert ($t_c$) einer Öffnungszeit des Ein/Aus-Ventils (4) in Abhängigkeit von der Differenz ($\triangle p$), einem Druck ($p_r$) innerhalb des Druckbehälters (2) und dem Druckabfall des Hochdruckbegrenzers (5) zu berechnen, und
das Öffnen des Ein/Aus-Ventils (4) entsprechend dem Öffnungszeitsollwert ($t_c$) zu steuern.

**Claims**

1. A method of feeding an ion thruster with propellant gas coming from a pressurized tank (2) via a feed circuit comprising an on/off valve (4) and, in succession downstream from said on/off valve (4), a high pressure restrictor (5), a buffer tank (6), and at least one low pressure restrictor (7), the method comprising the steps of:

• calculating a pressure setpoint ($p_c$) for the buffer tank (6) as a function of a flow rate setpoint ($Q_c$);
• calculating the difference ($\triangle p$) between the pressure setpoint ($p_c$) for the buffer tank (6) and a pressure ($p_t$) measured in the buffer tank (6);
• calculating a setpoint ($t_c$) for the opening time of the on/off valve (4) as a function of said difference ($\triangle p$), of a pressure ($p_r$) inside said pressurized tank (15), and of the head loss of the high pressure restrictor (5) ; and
• opening the on/off valve (4) in compliance with said opening time setpoint ($t_c$).

2. A feed method according to claim 1, wherein said opening time setpoint ($t_c$) is calculated on the basis of an inverse fluid flow model for said feed circuit.

3. A feed method according to claim 1 or claim 2, wherein the pressure setpoint ($p_c$) for the buffer tank (6) is calculated on the basis of an inverse fluid flow model of the at least one low pressure restrictor (7) downstream from the buffer tank (6).

4. A feed method according to any one of claims 1 to 3, wherein the opening of the on/off valve (4) in compliance with the opening time setpoint ($t_c$) is triggered only if the pressure setpoint ($p_c$) for the buffer tank (6) is greater than the pressure ($p_t$) measured in the buffer tank (6) by a 5% margin, optionally by a 10% margin.

5. A feed method according to any one of claims 1 to 4, wherein the opening of the on/off valve (4) in compliance with the opening time setpoint ($t_c$) is triggered only if the pressure ($p_t$) measured in the buffer tank (6) is decreasing or zero.

6. A feed method according to any one of claims 1 to 5, wherein the opening of the on/off valve (4) in compliance with the opening time setpoint ($t_c$) is triggered only if the opening time setpoint ($t_c$) is greater than a predetermined minimum threshold ($t_{c,min}$).

7. A feed method according to any one of claims 1 to 6, wherein said propellant gas feed circuit includes a bifurcation (8) downstream from the low pressure restrictor (7), having a first branch (9) for feeding an anode section of the ion thruster and a second branch (11) for feeding a cathode section of the ion thruster, each of said first and second branches (9, 11) having a respective additional restrictor (10, 12).

8. A feed method according to any preceding claim, wherein the pressure ($p_r$) inside said pressurized tank (2) is measured indirectly on the basis of an initial pressure ($p_i$) and of an overall flow of propellant gas that has passed through the feed circuit.

9. A feed method according to any preceding claim, wherein said propellant gas feed circuit also includes a safety valve (3) upstream from the on/off valve (4).

10. A device (1) for feeding an ion thruster with propellant gas, the device comprising:

> • a pressurized tank (2) for the propellant gas; and
> • a feed circuit connected to the pressurized tank and comprising at least an on/off valve (4), a high pressure restrictor (5), a buffer tank (6), and a low pressure restrictor (7) connected in succession downstream from the pressurized tank (2); and

a control unit (13) for controlling the on/off valve and configured to:

> • calculate a pressure setpoint ($p_c$) for the buffer tank (6) as a function of a flow rate setpoint ($Q_c$);
> • calculate the difference ($\Delta p$) between the pressure setpoint ($p_c$) for the buffer tank and a pressure ($p_t$) measured in the buffer tank (6);
> • calculate a setpoint ($t_c$) for the opening time of the on/off valve (4) as a function of said difference ($\Delta p$) of a pressure ($p_r$) inside said pressurized tank (2), and of the head loss of the high pressure restrictor (5) ; and
> • command opening of the on/off valve (4) in compliance with said opening time setpoint ($t_c$).

1/2

FIG.1

FIG.2

FIG.4

FIG.3A

FIG.3B

FIG.3C

FIG.3D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. B GANAPATHI et al.** Performance of the Xenon feed system of Deep Space One. *Journal of Spacecraft and Rockets,* 01 Mai 2000, vol. 37, 392